# EUROPEAN PATENT SPECIFICATION

(11) **EP 2 645 520 B1**
(45) Date of publication and mention of the grant of the patent: **28.01.2015**
(21) Application number: 13161595.7
(22) Date of filing: 28.03.2013
(51) Int. Cl.: H02J 4/00

(54) **Power distribution system and method of distributing power**
Leistungsverteilungssystem und Verfahren zur Verteilung von Leistung
Système de distribution de puissance et procédé de distribution d'énergie

(30) Priority: 29.03.2012 US 201213433925
(43) Date of publication of application: 02.10.2013
(73) Proprietor: Hamilton Sundstrand Corporation, Windsor Locks, CT 06096-1010 (US)
(72) Inventor: Krenz, Michael, Roscoe, IL Illinois 61073 (US); Wagner, Carl A., Beloit, WI Wisconsin 53511 (US); Wavering, Jeffrey T., Rockford, IL Illinois 61109 (US); Foster, Michael William, Rockford, IL Illinois 61107 (US); Simper, Norbert J., 86657 Bissingen (DE); Maier, Josef, 86754 Munningen (DE); Seidel, Rainer J., 86874 Tussenhausen (DE)
(74) Representative: Bridge, Kerry Ann

(56) References cited:
- EP-A2- 2 405 551
- EP-A2- 2 536 000
- US-A1- 2010 275 042
- US-B2- 6 833 635
- US-B2- 7 471 014

## Description

### BACKGROUND OF THE INVENTION

The present invention relates to power distribution systems, and more particularly to power distribution systems having a plurality of power sources and methods of distributing power within such systems.

Power distribution systems typically involve three general stages, including power generation, primary distribution and secondary distribution. Power generation includes a switch that protects a generator which functions in the power generation stage of the power distribution system. Primary distribution routes power from one or more power sources to various bus bars (e.g., left, right, essential, battery, etc.), and potentially includes cross ties between the bus bars to form a matrix of distribution between the power sources and the bus bars. Secondary distribution is typically tied between a single bus bar and to many individual loads. Therefore, each secondary distribution element is tied to only one bus and is reliant upon that bus being powered to function.

### BRIEF DESCRIPTION OF THE INVENTION

According to one embodiment, a power distribution system includes a plurality of power sources for generating power. Also included is at least one power routing element in operable communication with each of the plurality of power sources, the at least one power routing element being configured to selectively receive power from the plurality of power sources. Further included is at least one load in operable communication with the at least one power routing element, wherein the at least one power routing element controllably determines which of the plurality of power sources to selectively receive power from, wherein the at least one power routing element comprises a power block, characterised by the power block comprising a rectifier device for converting a power block input power type to a power block output power type.

According to another embodiment, a method of distributing power is provided. The method includes generating power with a plurality of power sources. Also included is distributing power from at least one of the plurality of power sources to at least one power routing element that is in operable communication with each of the plurality of power sources. Further included is controllably determining which of the plurality of power sources is to supply power to the at least one power routing element. Yet further included is powering at least one load with at least one of the plurality of power sources through the at least one power routing element.

According to yet another embodiment, a method of distributing power is provided. The method includes generating power with a first power source and a second power source. Also included is distributing power from the first power source to a power routing element. Further included is powering at least one load via the power routing element. Yet further included is switching the power received by the power routing element from the first power source to the second power source.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic illustration of an exemplary power distribution system having a plurality of power sources;
FIG. 2 is a solid state switch of the exemplary power distribution system in operable communication with the plurality of power sources; and
FIG. 3 is a flow diagram illustrating a method of distributing power with a system having the plurality of power sources according to an embodiment.

### DETAILED DESCRIPTION OF THE INVENTION

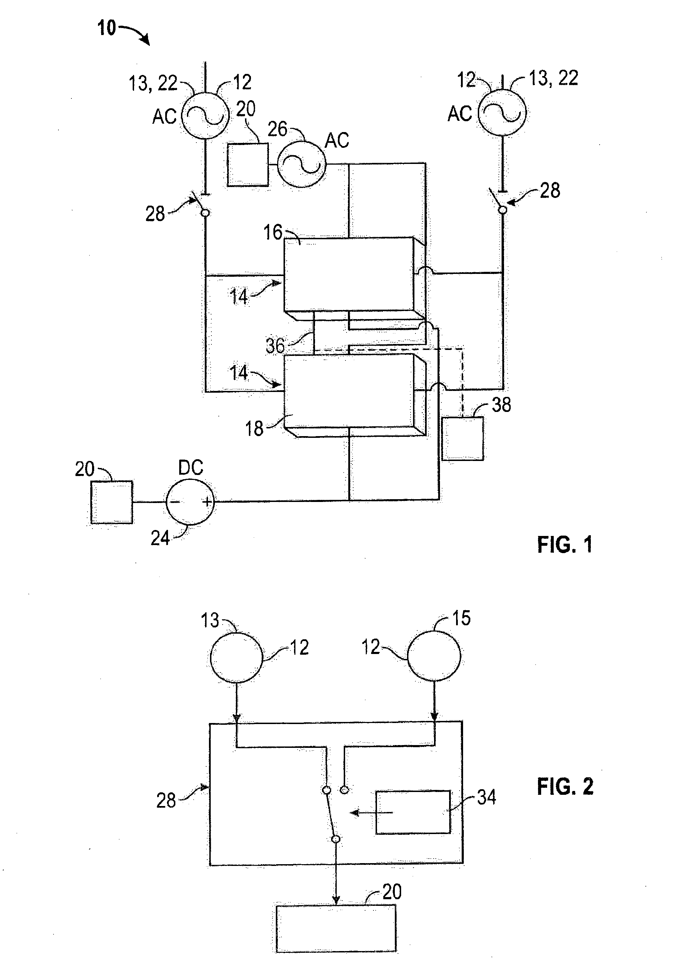

Referring to FIG. 1, a power distribution system is schematically illustrated with the reference numeral 10. The power distribution system 10 may function within a number of applications, including but not limited to vehicles, such as an aircraft, for example. Although discussed with reference to a vehicle, such as an aircraft, it is to be appreciated that the power distribution system 10 may be employed in conjunction with any application that requires power to be distributed from a plurality of sources to a variety of loads.

The power distribution system 10 includes at least one, but typically a plurality of power sources 12, and in the illustrated embodiment may be referred to as a left source 13 and a right source 15. The plurality of power sources 12 are capable of generating and supplying power within the power distribution system 10. Each of the plurality of power sources 12 is in operable communication with at least one, but typically a plurality of, power routing elements 14, such as a first power block 16 and a second power block 18, via at least one solid state switch 28. The term "power block" conceptually refers to hardware structure that functionally monitors and protects at least one load 20, but typically a plurality of load circuits. Nominally, this may include solid state power controllers (SSPCs), control logic, processing logic, internal communications busses, and power supplies to power various control elements. It may also include the devices necessary to convert the power from what is available at the input to the power block to what the various loads 20 require (e.g. AC to DC conversion). In the illustrated embodiment, each of the first power block 16 and the second power block 18 include a component, such as a rectifier, that converts an AC input power type 22 to a DC output power type 24, however, an AC output power type 26 may also be maintained for a load requiring such a power type. The exemplary components described above, with reference to the power block composition, are not an exhaustive list of potential components and functions that the power block may include, as other miscellaneous components or modules may be present to complement desired functionality. The first power block 16 and the second power block 18 may be operably tied by one or more communications bus 36. The power distribution system 10 also includes a controller 38 for receiving and processing a variety of information, as discussed below.

Referring to FIG. 2, each power routing element 14 comprises or is in operable communication with the at least one solid state switch 28, which may also be categorized as the power routing element 14 at a fundamental level. At least one of the plurality of power sources 12, such as the left source 13 and/or the right source 15, generates and supplies power to the at least one solid state switch 28 (FIG. 1), which then directs power to the at least one load 20. A control device 34 for the solid state switch 28 is generally illustrated, and in an exemplary embodiment is a power block, such as the first power block 16 or the second power block 18 described above.

Irrespective of the precise number of the plurality of power sources 12, the at least one power routing element 14 and the at least one load 20, each of the power routing elements 14 are in operable communication with each other via an element such as the previously-noted one or more communications bus 36 (FIG. 1). The communications bus 36 may communicate which of the plurality of power sources 12 are supplying power to a particular power routing element 14, as well as characteristics of the supplied power, such as the amount of current being drawn from each of the plurality of power sources 12. The communication of such information may be between each of the power routing elements 14 and/or a controller 38 (FIG. 1) that is configured to receive a variety of information and perform a variety of functions associated with the power distribution system 10. Such communication provides more efficient use of available power, with respect to the overall power distribution system 10.

The above-described power distribution system 10 provides the ability of a load 20 that is routed power by the first power block 16, for example, to receive power from more than one of the plurality of power sources 12, based on the ability of the first power block 16 to selectively determine which power source to supply power from. Such a configuration is particularly beneficial in a scenario where a power source is unavailable and rapid switching to a distinct power source is available. The at least one solid state switch 28 that is in communication, or integrated with the power routing element 14, such as a power block, is configured to measure current, rapidly switch and alter current limiting settings. Dynamic alteration of current limiting prevents overloading of a particular power source.

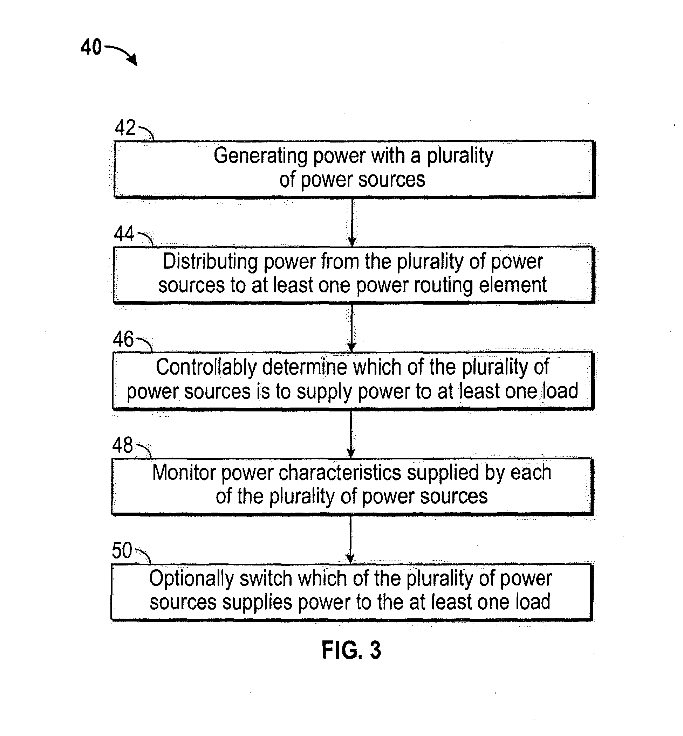

Referring to FIG. 3, a method of distributing power 40 based on the power distribution system 10 is also provided. The power distribution system 10 has been previously described and specific structural components need not be described in further detail. The method includes generating power with the plurality of power sources 42 and distributing such power to one or more loads via a power routing element 44, such as a power block. The power routing element is in operable communication with a plurality of power sources and is configured to controllably determine which of the plurality of power sources is to supply power 46 to the at least one load via the at least one power routing element. The determination of which of the plurality of power sources is to be drawn from is based on a variety of factors that take into account overall efficiency and availability of each of the plurality of power sources. Additionally, various power characteristics are monitored 48 and measured, such as the current drawn from each of the plurality of power sources. The current limit associated with trip logic of the power routing element, such as the power block, may be adjusted to prevent a particular power source from being overloaded. The solid state switch provides the capability to rapidly and reliably switch the power source from which power is being supplied 50 to the at least one load and is controlled, at least in part, by the power routing element, such as the first power block or second power block, which are in operable communication with each other to selectively determine which power source is to be drawn from.

Accordingly, a load powered by a power source is not reliant on availability or functionality of a single power source and the power distribution system is configured to selectively determine when and how much power to draw from a particular power source, which is enabled by the above-described solid state switches which are incorporated within or in communication with one or more power blocks.

While various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power distribution system (10) comprising:
a plurality of power sources (12) for generating power;
at least one power routing element (14) in operable communication with each of the plurality of power sources (12), the at least one power routing element (14) being configured to selectively receive power from the plurality of power sources (12); and
at least one load (20) in operable communication with the at least one power routing element (14), wherein the at least one power routing element (14) controllably determines which of the plurality of power sources (12) to selectively receive power from, wherein the at least one power routing element (14) comprises a power block (16), **characterised by** the power block (16) comprising a rectifier device for converting a power block input power type to a power block output power type.

2. The power distribution system of claim 1, further comprising a plurality of power routing elements (14) that are in operable communication with each other.

3. The power distribution system of claim 2, wherein the at least one load (20) is configured to receive power from each of the plurality of power routing elements.

4. The power distribution system of claim 1, wherein the at least one power routing element (14) comprises a solid state switch (28) configured to selectively determine which of the plurality of power sources (12) to draw power from, and preferably wherein the solid state switch (28) is configured to switch between one of the plurality of power sources for providing power to the at least one load.

5. The power distribution system of claim 1, wherein the power block (16) comprises at least one of a solid state power controller (SSPC), a logic unit, an internal communications bus (36), and a power supply.

6. The power distribution system of claim 1, wherein the power block input power type is alternating current (AC) and the power block output power type is direct current (DC).

7. A method of distributing power comprising:
generating power with a plurality of power sources (12);
distributing power from at least one of the plurality of power sources (12) to at least one power routing element (14) that is in operable communication with each of the plurality of power sources (12);
controllably determining which of the plurality of power sources (12) is to supply power to the at least one power routing element (14); and
powering at least one load (20) with at least one of the plurality of power sources (12) through the at least one power routing element (14), wherein the at least one power routing element comprises a power block and said method **characterised by** further comprising converting a power block input power type to a power block output power type.

8. The method of claim 7, further comprising operably connecting a first power routing element (14) to a second power routing element with at least one communication bus (36), and preferably further comprising communicating a current amount being drawn from at least one of the plurality of power sources (12) by the first power routing element (14) via the at least one communication bus (36) to the second power routing element.

9. The method of claim 7, wherein the at least one power routing element (14) comprises said power block having at least one solid state switch (28).

10. The method of claim 9, further comprising measuring a current drawn by the power block from at least one of the plurality of power sources, and preferably further comprising controlling the current limit for the current drawn by the power block.

11. The method of claim 9, further comprising switching between one the plurality of power sources (12) for selectively distributing power.

12. The method of any of claims 7 to 11 comprising:
generating power with a first power source (12) and a second power source (12);
distributing power from the first power source (12) to a power routing element (14);
powering at least one load (20) via the power routing element (14); and
switching the power received by the power routing element (14) from the first power source to the second power source.

13. The method of claim 12, wherein the power routing element (14) comprises a solid state switch (28), and preferably further comprising measuring and controlling a current drawn from at least one of the first power source (12) and the second power source (12).

## Patentansprüche

1. Leistungsverteilungssystem (10), umfassend:
eine Vielzahl von Leistungsquellen (12) zum Erzeugen von Leistung;
mindestens ein Leistungsführungselement (14) in Wirkverbindung mit jeder der Vielzahl von Leistungsquellen (12), wobei das mindestens eine Leistungsführungselement (14) konfiguriert ist, um selektiv Leistung von der Vielzahl von Leistungsquellen (12) zu empfangen; und
mindestens einen Verbraucher (20) in Wirkverbindung mit dem mindestens einen Leistungsführungselement (14), wobei das mindestens eine Leistungsführungselement (14) steuerbar bestimmt, von welcher der Vielzahl von Leistungsquellen (12) selektiv Leistung empfangen wird, wobei das mindestens eine Leistungsführungselement (14) einen Leistungsblock (16) umfasst, **gekennzeichnet dadurch, dass** der Leistungsblock (16) eine Gleichrichtervorrichtung zur Umwandlung eines Leistungsblock-Eingangsleistungstyps in einen Leistungsblock-Ausgangsleistungstyp umfasst.

2. Leistungsverteilungssystem nach Anspruch 1, weiter umfassend eine Vielzahl von Leistungsführungselementen (14), die miteinander in Wirkverbindung stehen.

3. Leistungsverteilungssystem nach Anspruch 2, wobei der mindestens eine Verbraucher (20) konfiguriert ist, um Leistung von jedem der Vielzahl von Leistungsführungselementen zu empfangen.

4. Leistungsverteilungssystem nach Anspruch 1, wobei das mindestens eine Leistungsführungselement (14) einen Festkörperschalter (28) umfasst, der konfiguriert ist, um selektiv zu bestimmen, von welcher der Vielzahl von Leistungsquellen (12), Leistung aufgenommen wird, und wobei der Festkörperschalter (28) vorzugsweise konfiguriert ist, um zwischen einer der Vielzahl von Leistungsquellen zu schalten, um den mindestens einen Verbraucher mit Leistung zu versorgen.

5. Leistungsverteilungssystem nach Anspruch 1, wobei der Leistungsblock (16) mindestens eins von einer Festkörperleistungssteuerung (SSPC), einer Logikeinheit, einem internen Kommunikationsbus (36) und einer Leistungsversorgung umfasst.

6. Leistungsverteilungssystem nach Anspruch 1, wobei der Leistungsblock-Eingangsleistungstyp Wechselstrom (AC) ist und der Leistungsblock-Ausgangsleistungstyp Gleichstrom (DC) ist.

7. Verfahren zum Verteilen von Leistung, umfassend:
Erzeugen von Leistung mit einer Vielzahl von Leistungsquellen (12);
Verteilen von Leistung von mindestens einer der Vielzahl von Leistungsquellen (12), an mindestens ein Leistungsführungselement (14) in Wirkverbindung mit jeder der Vielzahl von Leistungsquellen (12);
steuerbar Bestimmen, welche der Vielzahl von Leistungsquellen (12) das mindestens eine Leistungsführungselement (14) mit Leistung versorgen soll; und
Versorgen mindestens eines Verbrauchers (20) mit Leistung von mindestens einer der Vielzahl von Leistungsquellen (12) durch das mindestens eine Leistungsführungselement (14), wobei das mindestens eine Leistungsführungselement einen Leistungsblock umfasst, und das Verfahren weiter **dadurch gekennzeichnet ist, dass** es Umwandeln eines Leistungsblock-Eingangsleistungstyp in einen Leistungsblock-Ausgangsleistungstyp umfasst.

8. Verfahren nach Anspruch 7, weiter umfassend in Wirkbeziehung Bringen eines ersten Leistungsführungselements (14) mit einem zweiten Leistungsführungselement mit mindestens einem Kommunikationsbus (36), und vorzugsweise weiter umfassend Kommunizieren einer Strommenge, die von mindestens einer der Vielzahl von Leistungsquellen (12) durch das erste Leistungsführungselement (14) aufgenommen wird, über den mindestens einen Kommunikationsbus (36) an das zweite Leistungsführungselement.

9. Verfahren nach Anspruch 7, wobei das mindestens eine Leistungsführungselement (14) den Leistungsblock umfasst, der mindestens einen Festkörperschalter (28) aufweist.

10. Verfahren nach Anspruch 9, weiter umfassend Messen eines Stroms, der von dem Leistungsblock aus mindestens einer der Vielzahl von Leistungsquellen aufgenommen wird, und vorzugsweise weiter umfassend Steuern der Strombegrenzung für den Strom, der von dem Leistungsblock aufgenommen wird.

11. Verfahren nach Anspruch 9, weiter umfassend Schalten zwischen einer der Vielzahl von Leistungsquellen (12) zum selektiven Verteilen von Leistung.

12. Verfahren nach einem der Ansprüche 7 bis 11, umfassend:
Erzeugen von Leistung mit einer ersten Leistungsquelle (12) und einer zweiten Leistungsquelle (12);
Verteilen von Leistung von der ersten Leistungsquelle (12) an ein Leistungsführungselement (14);
Versorgen mindestens eines Verbrauchers (20) mit Leistung über das Leistungsführungselement (14); und
Umschalten der durch das Leistungsführungselement (14) empfangenen Leistung von der ersten Leistungsquelle zur zweiten Leistungsquelle.

13. Verfahren nach Anspruch 12, wobei das Leistungsführungselement (14) einen Festkörperschalter (28) umfasst und vorzugsweise weiter Messen und Steuern eines Stroms umfasst, der von mindestens einer von der ersten Leistungsquelle (12) und der zweiten Leistungsquelle (12) aufgenommen wird.

## Revendications

1. Système (10) de distribution de puissance, comprenant :
une pluralité d'alimentations électriques (12) servant à produire de l'électricité ;
au moins un élément d'acheminement de puissance (14) en communication de fonctionnement avec chacune des alimentations électriques (12) de la pluralité d'alimentations électriques, l'au moins un élément d'acheminement d'électricité (14) étant conçu pour recevoir de manière choisie de l'électricité de la pluralité d'alimentations électriques (12) ; et
au moins une charge (20) en communication en fonctionnement avec l'au moins un élément d'acheminement d'électricité (14), l'au moins un élément d'acheminement d'électricité (14) déterminant de manière contrôlable de laquelle de la pluralité d'alimentations électriques (12) elle doit recevoir de l'électricité, l'au moins un élément d'acheminement d'électricité (14) comprenant un bloc d'alimentation (16), **caractérisé par le fait que** le bloc d'alimentation (16) comprend un dispositif de redressement servant à convertir un type de puissance d'entrée de bloc d'alimentation en un type de puissance de sortie de bloc d'alimentation.

2. Système de distribution de puissance selon la revendication 1, comprenant en outre une pluralité d'éléments d'acheminement d'électricité (14) qui sont en communication en fonctionnement les uns avec les autres.

3. Système de distribution de puissance selon la revendication 2, dans lequel l'au moins une charge (20) est conçue pour recevoir de la puissance à partir de chacun des éléments d'acheminement d'électricité.

4. Système de distribution de puissance selon la revendication 1, dans lequel l'au moins un élément d'acheminement d'électricité (14) comprend un commutateur semi-conducteur (28) conçu pour déterminer de manière choisie de laquelle des alimentations électriques de la pluralité d'alimentations électriques (12) il doit prélever de la puissance, et de préférence où le commutateur semi-conducteur (28) est conçu pour commuter entre une alimentation électrique de la pluralité d'alimentations électriques pour conduire de l'électricité jusqu'à l'au moins une charge.

5. Système de distribution de puissance selon la revendication 1, dans lequel le bloc d'alimentation (16) comprend au moins un contrôleur de puissance semi-conducteur (SSPC), une unité logique, un bus de communications internes (36) et une alimentation électrique.

6. Système de distribution de puissance selon la revendication 1, où le type de puissance d'entrée de bloc d'alimentation est du courant alternatif (CA) et où le type de puissance de sortie de bloc d'alimentation est du courant continu (CC).

7. Procédé de distribution de puissance comprenant :
la production d'électricité par une pluralité d'alimentations électriques (12) ;
la distribution de puissance à partir d'au moins une alimentation électrique de la pluralité d'alimentations électriques (12) vers au moins un élément d'acheminement d'électricité (14) qui est en communication en fonctionnement avec chacune des alimentations électriques de la pluralité d'alimentations électriques (12) ;
la détermination contrôlée de laquelle des alimentations électriques de la pluralité d'alimentations électriques (12) doit conduire de l'électricité jusqu'à l'au moins un élément d'acheminement d'électricité (14) ; et
l'alimentation d'au moins une charge (20) par au moins une alimentation électrique de la pluralité d'alimentations électriques (12) à travers au moins un élément d'acheminement d'électricité (14), l'au moins un élément d'acheminement comprenant un bloc d'alimentation et ledit procédé **se caractérisant par** le fait de comprendre en outre la conversion d'un type de puissance d'entrée de bloc d'alimentation vers un type de puissance de sortie de bloc d'alimentation.

8. Procédé selon la revendication 7, comprenant en outre la connexion en fonctionnement d'un premier élément d'acheminement d'électricité (14) à un deuxième élément d'acheminement d'électricité par au moins un bus de communication (36), et comprenant en outre de préférence la communication d'une quantité électrique extraite d'au moins une alimentation électrique parmi la pluralité d'alimentations électriques (12) par le premier élément d'acheminement d'électricité (14) par le biais d'au moins un bus de communication (36) jusqu'au deuxième élément d'acheminement d'électricité.

9. Procédé selon la revendication 7, dans lequel l'au moins un élément d'acheminement d'électricité (14) comprend le fait que ledit bloc d'alimentation compte au moins un commutateur semi-conducteur (28).

10. Procédé selon la revendication 9, comprenant en outre la mesure d'une intensité extraite du bloc d'alimentation à partir d'au moins une alimentation électrique de la pluralité d'alimentations électriques, et comprenant en outre de préférence le contrôle de la limite d'intensité pour le courant extrait par le bloc d'alimentation.

11. Procédé selon la revendication 9, comprenant en outre la commutation entre une des alimentations électriques de la pluralité d'alimentations électriques (12) pour distribuer de la puissance de manière choisie.

12. Procédé selon l'une quelconque des revendications 7 à 11, comprenant :
la production d'électricité par une première alimentation électrique (12) et par une deuxième alimentation électrique (12) ;
la distribution de puissance à partir de la première alimentation électrique (12) et vers un élément d'acheminement d'électricité (14) ;
l'alimentation d'au moins une charge (20) par le biais de l'élément d'acheminement d'électricité (14) ; et
la commutation de la puissance reçue par l'élément d'acheminement d'électricité (14) de la première alimentation électrique à la deuxième alimentation électrique.

13. Procédé selon la revendication 12, où l'élément d'acheminement d'électricité (14) comprend un commutateur semi-conducteur (28) et comprenant en outre de préférence la mesure et le contrôle d'un courant extrait d'au moins l'une de la première alimentation électrique (12) et de la deuxième alimentation électrique (12).
